# EUROPEAN PATENT APPLICATION

(11) **EP 1 080 665 A1**
(43) Date of publication of application: **07.03.2001**
(21) Application number: 00202537.7
(22) Date of filing: 14.07.2000
(51) Int. Cl.: A47B 9/08

(54) **Adjustable telescopic structure**

(30) Priority: 16.07.1999 NL 1012628
(71) Applicant: OLDE-HEUVEL, Bernardus Johannes Maria, 7482 LD Haaksbergen (NL)
(72) Inventor: OLDE-HEUVEL, Bernardus Johannes Maria, 7482 LD Haaksbergen (NL)
(74) Representative: Prins, Hendrik Willem

(57) **Abstract**

The invention relates to an adjustable telescopic structure comprising:
a first elongate part;
a second elongate part co-acting for telescopic sliding with this first part;
which two parts have respectively a prismatic first surface and a second surface running at an angle of 5°-20° to the longitudinal direction of the structure and together thus bound at least one wedge-shaped space in which at least one wedge element is accommodated, which wedge element can co-act with both bounding surfaces of the wedge-shaped space in wedging manner and thus blocking the mutual displacement in one direction of the parts, this in the situation where a force changing the mutual position of the parts acts on the parts; and
release means operable from outside for temporarily rendering inactive the or each wedge element, so that the structure can be modified by exerting an appropriate force.

## Description

The invention relates to an adjustable telescopic structure comprising:
a first elongate part;
a second elongate part co-acting for telescopic sliding with this first part;
which two parts have respectively a prismatic first surface and a second surface running at an angle of 5°-20° to the longitudinal direction of the structure and together thus bound at least one wedge-shaped space in which at least one wedge element is accommodated, which wedge element can co-act with both bounding surfaces of the wedge-shaped space in wedging manner and thus blocking the mutual displacement in one direction of the parts, this in the situation where a force changing the mutual position of the parts acts on the parts; and
a sleeve operable from outside and slidable between the parts for temporarily rendering inactive the or each wedge element, so that the structure can be modified by exerting an appropriate force.

Such a structure, for instance in the form of a leg of adjustable length, is known from US-A-3 871 780. A known leg comprises a first leg part, a second leg part co-acting for telescopic sliding with this first leg part and means for fastening the leg parts in a chosen relative position. Screw means can for instance be used for mutual blocking of the leg parts. For office chairs for instance use is also made of adjusting means based on a gas spring of adjustable length.

It is an object of the invention to provide an adjustable telescopic structure which, when loaded, has in principle no tendency to adjust.

It is a further object of the invention to embody an adjustable structure such that only in non-loaded situation can the structure be adjusted without substantial force, i.e. the mutual position of the mutually telescopic co-acting parts can vary. In the case of a leg the length can thus be adjusted.

Finally, it is an object of the invention to embody a structure such that in both loaded and non-loaded situation the structure can be adjusted in a determined direction by exerting an appropriate force.

With a view to the above objectives, the invention provides an adjustable telescopic structure which is characterized in that the sleeve extends over substantially the whole length of one of the elongate parts.

The advantage hereof is that the bottom part of the leg can be gripped at any point in order to adjust the leg.

In order to make the contact surface between the bounding surfaces of the wedge-shaped space and the wedge element as large as possible in order to thereby reduce the contact pressure as much as possible, the structure has the special feature according to an aspect of the invention that a wedge element has a form adapted to the form of the wedge-shaped space.

A specific embodiment has the feature that a wedge element is a free-rolling ball or disc.

An embodiment in which the structure assumes a position with a substantial vertical component during use, can advantageously have the special feature that a wedge element is urged to its active position by the force of gravity.

In combination herewith or as alternative, the structure can have the special feature that a wedge element is urged to its active position by spring means. In this embodiment the action of the wedge elements does not have to depend on the force of gravity, so that, if desired, the structure can even be applied in horizontal position.

In order to make the form-retention and the mechanical controllability of the structure as great as possible, the structure has the special feature according to an aspect of the invention that a wedge element consists of metal, in particular stainless steel or aluminium. Aluminium has the advantage of a low weight, a compression strength sufficient under most conditions and corrosion resistance.

In another embodiment the structure has the feature that a wedge element, particularly for balls, consists of plastic, for instance a nylon. This has the advantage that the wedge element can deform slightly whereby the contact area increases and the contact pressure is decreased, whereby the elongate parts can take a thin-walled form.

The embodiment in which a wedge element has a form adapted to the wedge-shaped space can advantageously have the special feature that the second surface has a very low coefficient of friction in common with a wedge element.

According to an aspect of the invention the structure can for instance have for this purpose the special feature that the bounding surface in question is provided with a friction-reducing coating, for instance of PTFE.

In order to realize the best possible compromise between the contact pressure discussed above and a reliable wedging action, the wedge angle must be chosen carefully. In accordance with the insight at the time this patent application was drafted, the structure has the special feature according to an aspect of the invention that the bounding surfaces of the wedge-shaped space together form an angle of (12±4)°, preferably (12±2)°, more preferably (12±1)°. This angle is determined by the coefficient of friction between the wedge element and the first surface.

In order to reduce the contact pressure when balls or discs are used, the structure can advantageously have the special feature that at least the outer part possesses a non-round form, for instance has a cross-section with a generally polygonal shape, wherein the part of the inner surface of this outer part forming a bounding surface of the wedge-shaped space has an at least more or less part-cylindrical shape with a radius of curvature substantially equal to that of the ball.

For the same reason the structure can have the special feature that at least the inner part has a non-round form with at least one at least more or less part-cylindrical recess with a radius of curvature equal to that of the ball or disc which co-acts with this recess.

The specific embodiment has the special feature that the release sleeve and the outer leg part are mutually coupled for joint displacement by means of a friction coupling. A change in position of the telescopic parts in either of the two directions of movement can hereby be brought about selectively in completely natural manner by gripping the release sleeve extending around the inner elongate part.

Particularly in the case of a telescopic structure which is for instance used outside, such as an adjustable leg of garden furniture, the structure can advantageously have the special feature that the release sleeve and the inner part are sealingly connected to each other by bellows means. The penetration of dust and dirt is hereby effectively prevented.

It will be apparent that the latter described two aspects of the invention can advantageously be combined.

The invention will now be elucidated with reference to the accompanying drawings. Herein:
figure 1 shows a collapsible table with four legs according to the invention;
figure 2 shows a photo or film tripod with three legs according to the invention;
figure 3 shows a partly cut-away perspective view of a leg according to the invention in a first embodiment;
figure 4 is a view corresponding with figure 3 of a second embodiment;
figure 5 is a cut-away perspective view of a leg in a third embodiment;
figure 6 shows a view corresponding with figure 3 of a fourth embodiment;
figure 7 shows a view corresponding with figure 3 of a fifth embodiment;
figure 8 is a partly broken-away perspective view of a sixth embodiment;
figure 9 shows a view corresponding with figure 8 of a seventh embodiment;
figure 10 is a partly broken-away perspective view of an eighth embodiment;
figure 11 shows a ninth embodiment;
figure 12 shows a tenth embodiment;
figure 13 shows an eleventh embodiment;
figure 14 shows a twelfth embodiment;
figure 15 shows a thirteenth embodiment;
figure 16 shows a fourteenth embodiment;
figures 17 (a), (b) and (c) show diverse embodiments of operating members;
figure 18 shows a fifteenth embodiment;
figure 19 shows a sixteenth embodiment;
figure 20 shows a seventeenth embodiment.

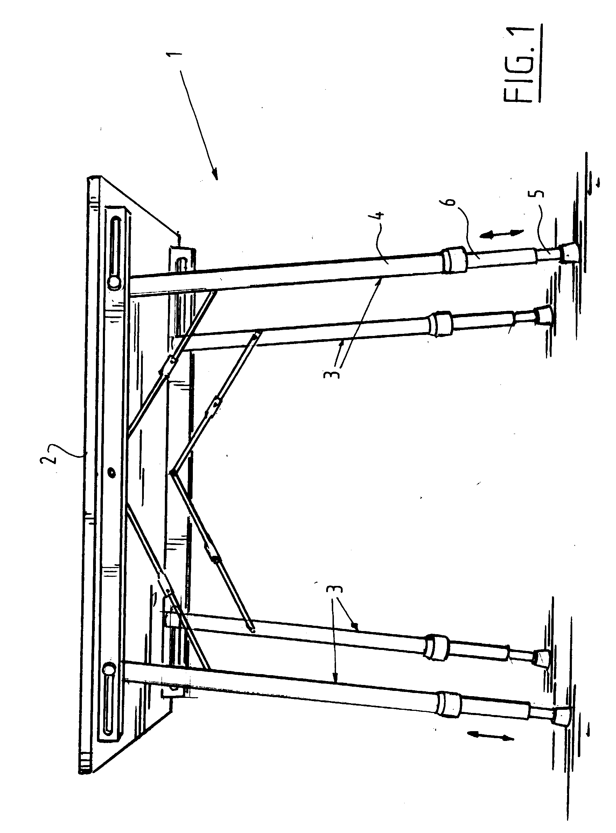

Figure 1 shows a table 1 with a table top 2 and four identical legs 3 according to the invention. Each leg 3 comprises an upper and outer leg part 4 and a lower and inner leg part 5. Operating sleeve 6 is coupled to outer leg part 4 by friction force. Leg parts 4 and 5 are telescopically slidable relative to each other. Between both leg parts 4 and 5 is situated an operating sleeve 6, upward pressing of which in non-loaded situation enables shortening of leg 3 by sliding the inner leg part upward. Leg 3 can be shortened by moving operating sleeve 6 upward in non-loaded situation. Leg 3 can be lengthened by moving operating sleeve 6 downward in either the loaded or non-loaded situation. As soon as the actuation of operating sleeve 6 is terminated, an upward directed displacement of leg part 5 will be blocked by a mechanism according to the invention to be described hereinafter. If desired, the leg 3 can however be effectively lengthened by moving leg part 4 upward counter to the mechanical load. This possibility is independent of the load. It will however be apparent that in order to carry out such an extension a sufficiently great force must be exerted in order to overcome the load.

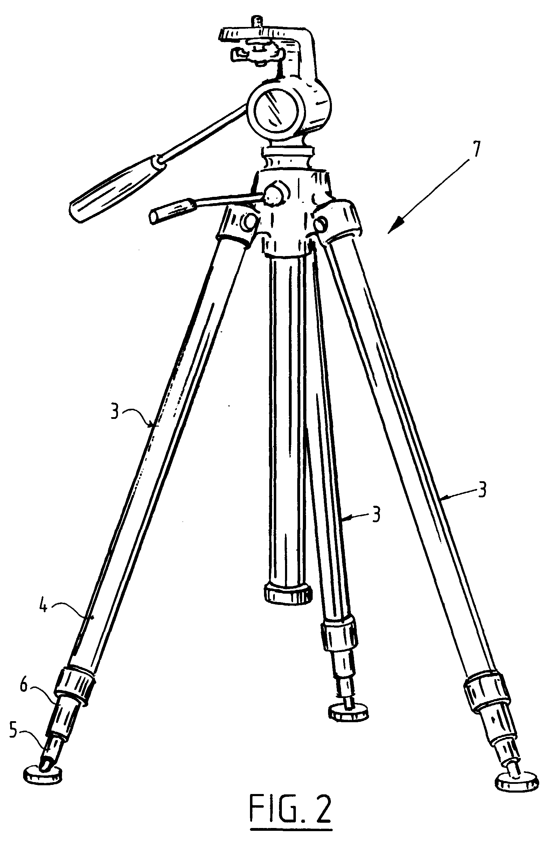

Figure 2 shows a tripod 7 with three legs 3.

In the figures to be described hereinbelow functionally corresponding components are, where possible and practical, always designated with the same reference numerals. It should however be understood that in the diverse embodiments now following, diverse components are mutually differing.

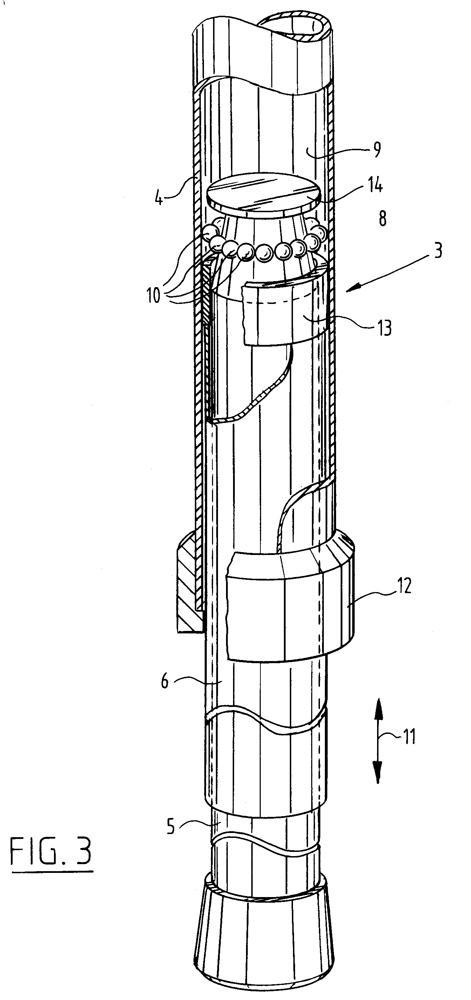

Figure 3 shows a first embodiment. Inner leg part 5 has on its top side a conical wedge surface 8, half the apex angle of which is roughly 12°. Between this wedge surface 8 and the inner surface 9 is situated a ring of stainless steel balls 10 which can co-act in rolling manner with said surfaces and, at any tendency toward downward directed displacement of leg part 4, are thus clamped wedgingly and non-movably between said surfaces, whereby the relative displacement of leg parts 4 and 5 is further blocked. By moving the operating sleeve, which is movable up and downward according to arrow 11, upward in substantially non-loaded state of leg 3, the balls 10 can be pressed upward out of their wedging position, whereby leg parts 4 and 5 are freely movable.

A sliding ring 12 of for instance plastic can serve as decorative finish of the bottom edge of leg part 4. Nor, because of this ring 12, does leg part 4 slide in metallic contact over the outer surface of operating sleeve 6. Further present for this purpose is a second sliding ring 13 which is arranged on the end of operating sleeve 6, which serves as sliding guide of leg parts 4 and 5 and also as unlocking element for balls 10.

Together with sliding ring 13 the sliding ring 12 also forms an end stop, and also has a sealing function in addition to the described functions. Particularly in the case of outdoor use this can be of importance for a good operation of the device according to the invention. Camping tables or the like can for instance be envisaged.

Situated on the top part of leg part 5 is a plate 14 which ensures that balls 10 remain bounded in the wedge-shaped space which is bounded by inner surface 9 and conical wedge surface 8.

The leg 3 according to the invention is dependent on the at least more or less vertical position of the leg, since only in the case of a substantial vertical component can balls 10 take up their active wedging position under the influence of gravity.

After the foregoing comprehensive description of the first embodiment according to figure 3, the subsequent embodiments will only be described briefly.

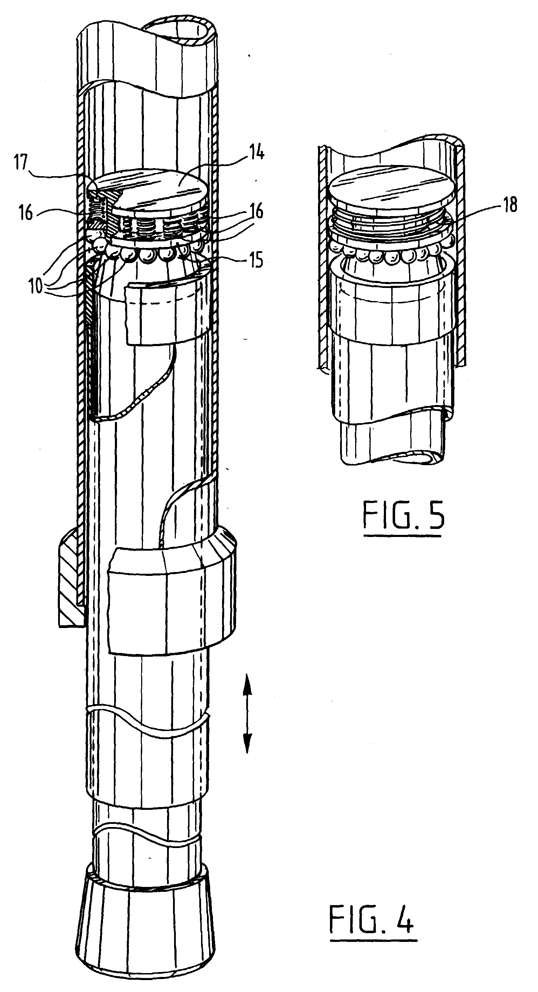

Figure 4 shows a variant, wherein balls 10 are spring-loaded via a pressure plate 15 by means of a number of helical springs 16 which are held in position by protrusions 17 on the underside of plate 14. This second embodiment is hereby not dependent on the effect of gravity.

Figure 5 shows a third embodiment in which springs 16 are replaced with one helical spring 18.

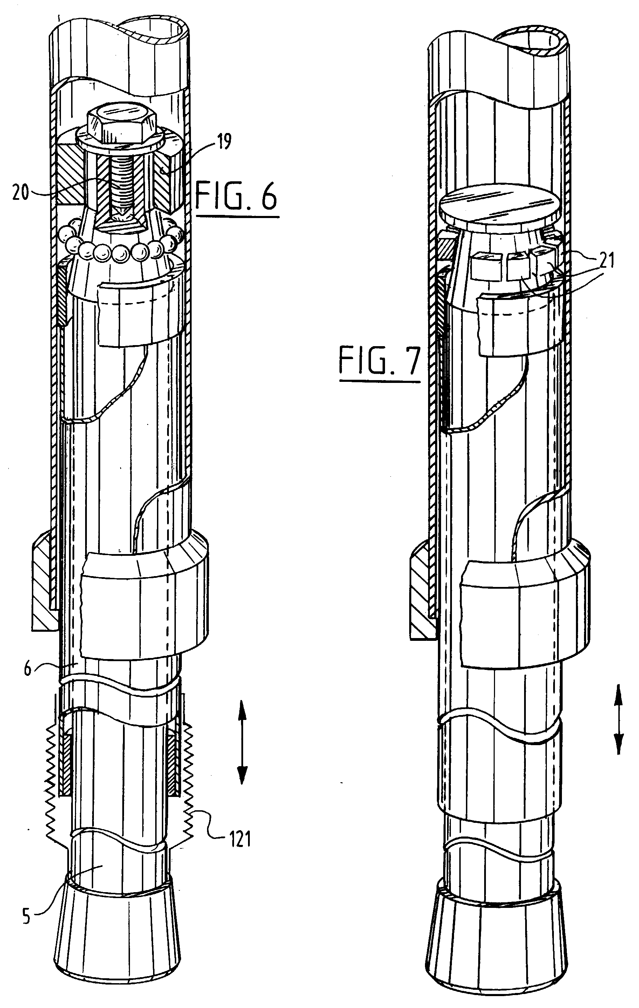

Figure 6 shows a variant which substantially corresponds with the first embodiment according to figure 3. In this fourth embodiment a sliding ring 19 is situated on the free upper end of leg part 5, which ring is fixed by means of a bolt 20. Attention is drawn to the fact that in this embodiment operating sleeve 6 and inner leg part 5 are coupled sealingly to each other by means of a flexible rubber bellows 121. This bellows not only has an aesthetic function, but is also effective in preventing penetration of dust and dirt into the wedge space, which could influence the operation of the device.

When flexible rubber bellows 121 acts as compression spring, this bellows 121 will then press operating sleeve 6 upward relative to inner leg part 5 when the leg is not loaded, and deactivate the wedge elements. Sliding ring 12 acts as friction coupling between the outer leg part and operating sleeve 6. In non-loaded state the inner leg part 5, together with operating sleeve 6, can easily be displaced reciprocally since the wedge elements are not in operation. The only resistance which must be overcome is the resistance exerted by sliding ring 12.

When the leg according to figure 6 is placed in a loaded state, the inner leg part 5 will then slide upward relative to operating sleeve 6, whereby the operating sleeve no longer engages on the wedge elements and these can thus perform their wedging action. A prerequisite here is that the friction force of sliding ring 12 is greater than the spring force of flexible rubber bellows 121.

Figure 7 shows a fifth embodiment which corresponds with the first embodiment of figure 3, but which comprises instead of balls a ring of wedge elements, the outer surface of which has the same radius of curvature as inner surface 9 and the inner surface of which has a form adapted to the form of the conical wedge surface 8 at the level of the wedging action. Relative to balls 10 this embodiment can have the advantage that the contact pressure between wedge elements 21 and the surfaces co-acting therewith can be substantially smaller.

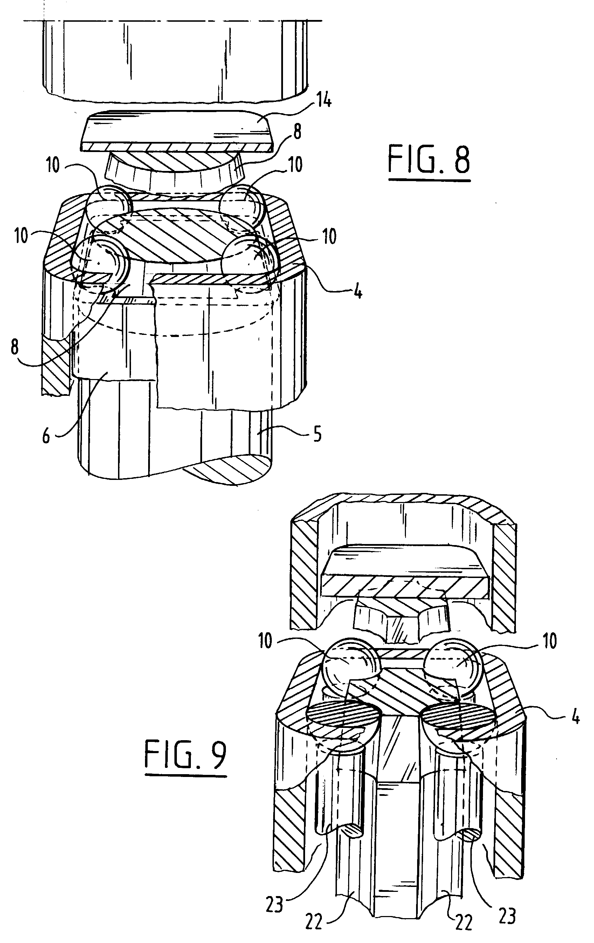

Figure 8 shows a sixth embodiment in which outer leg 4 has a non-round, in this case generally tetragonal shape. In this embodiment the corner zones of inner surface 9 are formed such that their curvature corresponds with the curvature of balls 10. A substantial reduction in contact pressure is hereby realized. In this embodiment balls 10 co-act with the conical wedge surface 8 of leg part 5.

Figure 9 shows a seventh embodiment which differs from the sixth embodiment according to figure 8 in the sense that inner leg part 5 has four part-cylindrical recesses 22 with the same radius of curvature as balls 10. Although this is not clearly visible in figure 9, recesses 22 have an inclining position similar to conical wedge surface 8.

The angle at which balls 10 are situated in the embodiment according to figure 9 is about 90°. The balls are in line contact with leg parts 4 and 5 at this angle.

Figure 9 shows actuating rods 23 which are connected to operating sleeve 6 in a manner not drawn.

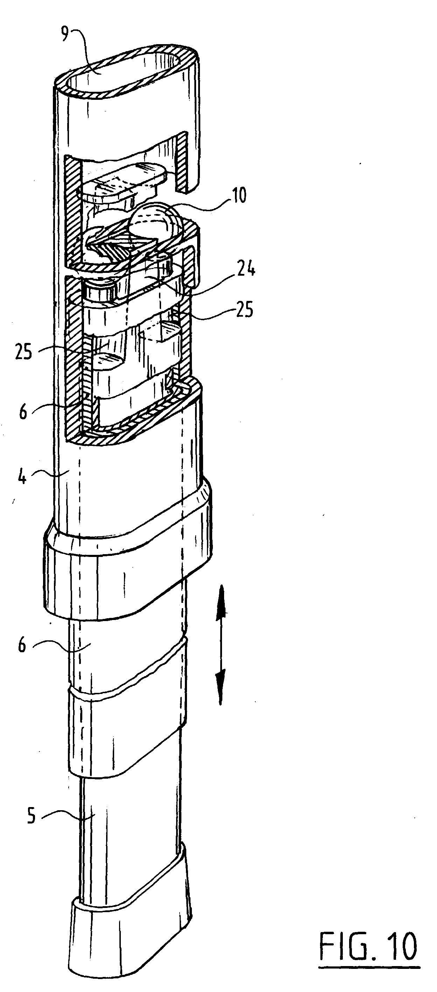

Finally, figure 10 shows an eighth embodiment which functionally corresponds with the seventh embodiment of figure 9. In this last embodiment the balls 10 lie at an angle of 180° against the inner surface 9 of outer leg part 4. The inner leg part 5 carries an end zone 24 with two recesses 25 facing away from each other. The short end zones of inner surface 9 and recesses 25 have the same radii of curvature as balls 10.

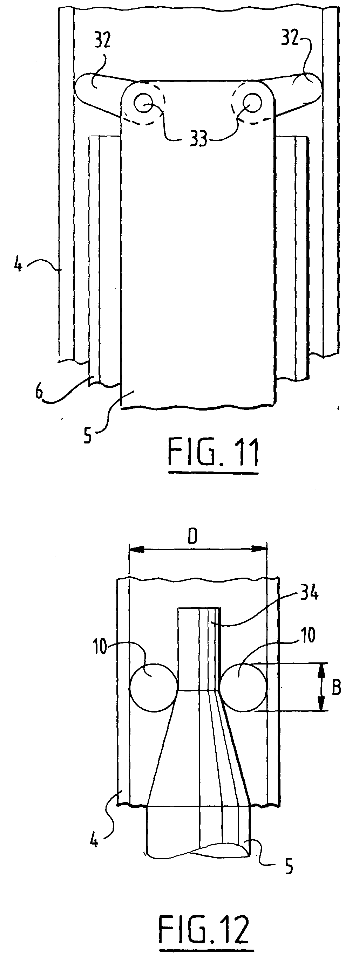

Figure 11 shows an embodiment in which wedge elements 32 are embodied as wings pivotable round hinges 33.

Figure 12 shows an embodiment in which balls 10 fit with a small clearance of for instance 0.1 mm between outer tube 4 and a narrowed end part 34 of inner tube 5. This clearance must in any case be smaller than the clearance between inner tube 5 and outer tube 4. This structure prevents the different balls being subjected to mutually differing wedging forces. Such an unequal wedging force could have the undesired consequence that release by means of operating sleeve 6 would have to involve an unintentionally large amount of force. This structure also prevents a decentring of leg part 5 relative to leg part 4, whereby operating sleeve 6 remains freely moveable.

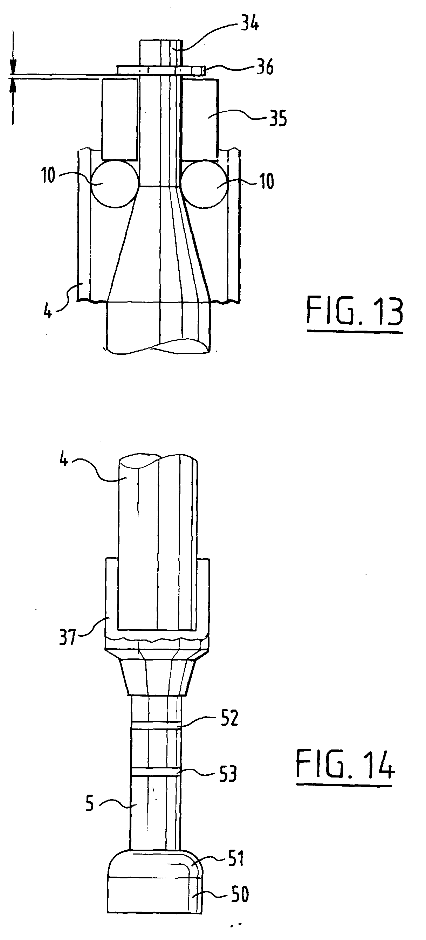

Figure 13 shows a variant of the tenth embodiment according to figure 12. Via a sleeve 35 a stop ring 36, which is mounted on narrowed part 34 as clamping ring, co-acts with balls 10 in order to limit their displacement. A stated, the maximum displacement can lie for instance in the order of magnitude of a maximum of 1 mm.

Figure 14 shows the use of a collar 37. This collar 37 serves both as seal and friction coupling as discussed above. The wedge elements can be released by exerting the above discussed upward directed force counter to the spring force of collar 37. This means that the friction force to which the collar is subjected must be greater than the spring force of bellows 51. The structure according to figure 14 also allows a placing of the structure other than vertically.

On the underside the inner leg part 5 bears a foot 50 with the bellows 51 also serving as spring element. Marks 52, 53 can serve as pre-orientating first setting.

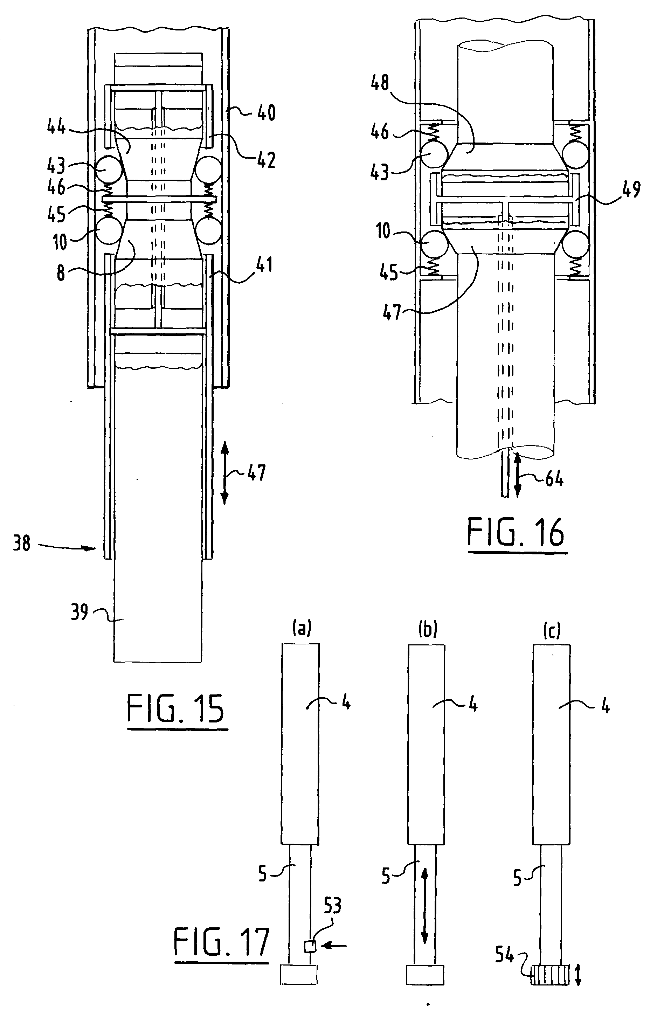

Figure 15 shows a telescopic structure 38 securable and releasable in two directions with an inner tube or inner rod 39, an outer tube 40 and two operating sleeves 41, 42 which are rigidly coupled to each other and which operate respective rings of balls 10, 43. Inner tube 39 has for this purpose the wedge surface 8 and a wedge surface 44 located opposite and placed in opposite direction, as the figure clearly shows. Balls 10 and 43 are loaded by respective springs 45 and 46, whereby in rest conditions the displacement in either of the two directions is blocked. Only by exerting an actuating force as according to arrows 47 in one of the two directions can the relevant ring of balls 10, 43 be released, so that displacement of telescopic parts 39, 40 is possible. Such an embodiment may for instance be important for a crutch. Such a crutch can preferably be adjusted once-only, while the danger of a change in length occurring unintentionally is practically negligible.

Figure 16 shows the variant of the thirteenth embodiment according to figure 15. This fourteenth embodiment is technically wholly equivalent to the embodiment of figure 15, but has a somewhat simpler construction, since wedge surfaces 47, 48 define a widening instead of a narrowing conical shape. Operating sleeve 49 can hereby take a single form.

Figure 17 shows different operating mechanisms for releasing the wedging action. Figure 17a shows the use of a push-button 53. Figure 17b shows the embodiment in accordance with figure 3, in which the operating sleeve is in friction-coupled co-action with inner tube 5, and figure 17c shows the use of a rotatable operating element 54.

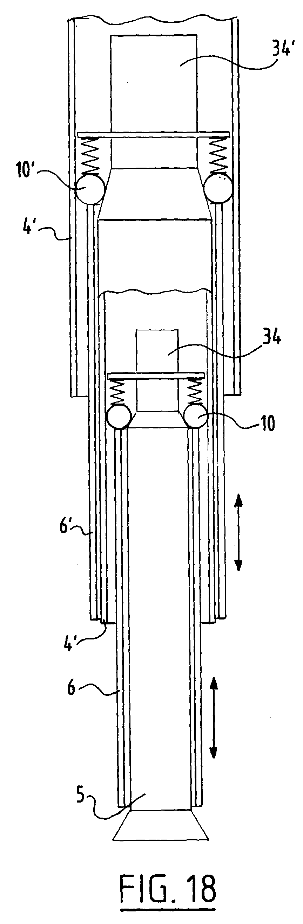

Figure 18 shows the fifteenth embodiment, the operation of which corresponds in principle with that of figure 4. In this embodiment according to figure 18 the structure comprises an inner tube 5 and an operating sleeve 6 engaging therearound, an outer tube 4 and the ring of balls 10.

Outer tube 4 also serves as inner tube for a second telescopic structure with operating sleeve 6' and an outer tube 4'. It will be apparent that with the structure according to figure 18 the part-structures in question can be adjusted by individual operation of the operating sleeves 6 and 6'. It will further be apparent that such a cascading can also comprise more than the shown two stages.

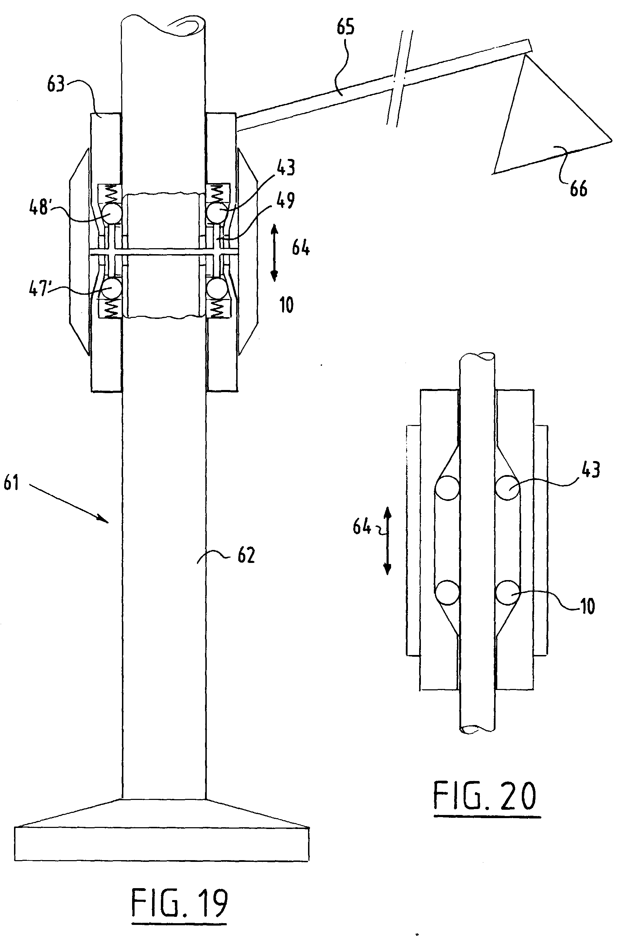

Figures 19 and 20 show a structure 61 according to the invention for use as for instance a lamp stand. A stand 62 bears a carriage 63 slidable thereover, which is thus telescopically adjustable. By means of a structure comparable to that of the fourteenth embodiment according to figure 16. In this embodiment the conical wedge surfaces 47', 48' are arranged on carriage 63. By operating the operating sleeve 49 as according to arrow 64 the wedging action of balls 10, 43 can be released in each of the two directions.

In this embodiment an arm 65 supports a lighting unit 66. The structure according to figure 19 is also vary suitable for applications other than as adjustable lamp. Medical applications, such as an infusion holder or the like, can for instance be envisaged.

Figure 20 shows the analogy of respectively the embodiments according to figure 15 and figure 16 the equivalent complementary embodiment.

## Claims

1. Adjustable telescopic structure comprising:
a first elongate part;
a second elongate part co-acting for telescopic sliding with this first part;
which two parts have respectively a prismatic first surface and a second surface running at an angle of 5°-20° to the longitudinal direction of the structure and together thus bound at least one wedge-shaped space in which at least one wedge element is accommodated, which wedge element can co-act with both bounding surfaces of the wedge-shaped space in wedging manner and thus blocking the mutual displacement in one direction of the parts, this in the situation where a force changing the mutual position of the parts acts on the parts; and
a sleeve operable from outside and slidable between the parts for temporarily rendering inactive the or each wedge element, so that the structure can be modified by exerting an appropriate force,
**characterized in that**
the sleeve extends over substantially the whole length of one of the elongate parts.

2. Structure as claimed in claim 1, wherein a wedge element has a form adapted to the form of the wedge-shaped space.

3. Structure as claimed in claim 1, wherein a wedge element is a free-rolling ball or disc.

4. Structure as claimed in claim 1, wherein a wedge element is urged to its active position by the force of gravity.

5. Structure as claimed in claim 1, wherein a wedge element is urged to its active position by spring means.

6. Structure as claimed in claim 1, wherein a wedge element consists of metal, in particular stainless steel or aluminium.

7. Structure as claimed in claim 1, wherein a wedge element consists of plastic, for instance a nylon.

8. Structure as claimed in claim 2, wherein the second surface has a very low coefficient of friction in common with a wedge element.

9. Structure as claimed in claim 8, wherein the relevant bounding surface is provided with a friction-reducing coating, for instance of PTFE.

10. Structure as claimed in claim 1, wherein the bounding surfaces of the wedge-shaped space together form an angle of (12±4)°, preferably (12±2)°, more preferably (12±1)°.

11. Structure as claimed in claims 2 and 3, wherein at least the outer part possesses a non-round form, for instance has a cross-section with a generally polygonal shape, wherein the part of the inner surface of this outer part forming a bounding surface of the wedge-shaped space has an at least more or less part-cylindrical shape with a radius of curvature substantially equal to that of the ball or disc.

12. Structure as claimed in claims 2 and 3, wherein at least the inner part has a non-round form with at least one at least more or less part-cylindrical recess with a radius of curvature equal to that of the ball or disc which co-acts with this recess.

13. Structure as claimed in claim 1, wherein the release sleeve and the outer leg part are mutually coupled for joint displacement by means of a friction coupling.

14. Structure as claimed in claim 1, wherein the release sleeve and the inner part are sealingly connected to each other by bellows means.

15. Structure as claimed in claim 1, wherein a prismatic surface connects to the free end of the second surface, which prismatic surface has a distance relative to the inner surface of the other part which is a little greater than the width transverse dimension of each wedge element.

16. Structure as claimed in claim 1, wherein the two telescopic parts are coupled by a bellows which also serves as spring element and which drives apart said telescopic parts so that the wedge elements are inactive in the non-loaded situation.
